# EUROPÄISCHE PATENTSCHRIFT

(11) **EP 1 081 003 B1**
(45) Veröffentlichungstag und Bekanntmachung des Hinweises auf die Patenterteilung: **31.07.2002**
(21) Anmeldenummer: 00117619.7
(22) Anmeldetag: 16.08.2000
(51) Int. Cl.: B60T 1/087, B60T 10/02

(54) **Baugruppe für eine Brennkraftmaschine**
Assembly for an internal combustion engine
Ensemble pour moteur à combustion interne

(30) Priorität: 21.08.1999 DE 19939726
(43) Veröffentlichungstag der Anmeldung: 07.03.2001
(73) Patentinhaber: Voith Turbo GmbH & Co. KG, 89522 Heidenheim (DE); MAN Nutzfahrzeuge Aktiengesellschaft, 80995 München (DE)
(72) Erfinder: Friedrich, Jürgen, 74564 Crailsheim (DE); Vogelsang, Klaus, 74564 Crailsheim (DE); Möller, Heribert, 91623 Sachsen (DE)
(74) Vertreter: Weitzel, Wolfgang, Dr.-Ing.

(56) Entgegenhaltungen:
- EP-A- 0 716 966
- DE-A- 2 112 742
- FR-A- 1 521 399
- GB-A- 1 394 450
- US-A- 4 191 072

## Beschreibung

Die Erfindung betrifft eine Baugruppe für eine Brennkraftmaschine zum Antreiben eines Hilfsaggregates, beispielsweise des Laufrades eines Lüfters. Eine Baugruppe gemäß dem oberbegrift des Anspruchs 1 geht Z.B aus US-A-4 191 072 hervor.

Es ist bekannt, das zum Antreiben von Hilfsaggregaten notwendige Drehmoment von der Brennkraftmaschine abzuleiten und demgemäß einen Hilfs-Antriebsstrang vorzusehen, über welchen das Hilfsaggregat mit dem Motor in Triebverbindung steht. Dabei wird häufig in den Hilfsantriebsstrang eine Kupplung zwischengeschaltet, beispielsweise eine hydrodynamische Kupplung.

Es ist ferner bekannt, der Brennkraftmaschine einen hydrodynamischen Retarder zuzuordnen. Dabei steht der Rotor des Retarders mit der Hauptantriebswelle, im allgemeinen der Kurbelwelle, der Brennkraftmaschine in Triebverbindung, um bei Bedarf eine Bremskraft zu erzeugen.

Insbesondere dann, wenn es sich bei Brennkraftmaschinen um Motoren zum Antrieb von Fahrzeugen handelt, besteht ein wesentliches Erfordernis darin, den gesamten Antriebsstrang mit allen seinen Einzelteilen so kompakt und so leicht wie möglich zu gestalten. Der Erfindung liegt die Aufgabe zugrunde, eine Baugruppe für eine Brennkraftmaschine, umfassend einen Retarder, eine Kupplung sowie ein Hilfsaggregat noch kompakter und noch leichter zu gestalten, als dies seither der Fall war.

Diese Aufgabe wird durch die Merkmale von Anspruch 1 gelöst.

Die Baugruppe umfaßt dem gemäß einen Hilfsantriebsstrang mit einer Primärwelle und einer Sekundärwelle. Dabei steht die Primärwelle mit der Brennkraftmaschine, beispielsweise einem Dieselmotor, in Triebverbindung. Primärwelle und Sekundärwelle sind koaxial zueinander angeordnet. Die Primärwelle trägt einen Retarder. Der Rotor dieses Retarders steht mit der Primärwelle in Triebverbindung.

Zum Herstellen einer Triebverbindung zwischen Primärwelle und Sekundärwelle ist eine Kupplung vorgesehen. Dabei ist die Anordnung so getroffen, daß das eine Kupplungsteil von der Primärwelle angetrieben ist, und daß das andere Kupplungsteil mit der Sekundärwelle in Triebverbindung steht. Die Sekundärwelle wiederum treibt das Hilfsaggregat an, zum Beispiel das Laufrad eines Lüfters.

Die Triebverbindung zwischen der Brennkraftmaschine und der Primärwelle wird im allgemeinen auf mechanische Weise verwirklicht sein. Dabei kann ein Hochgang zwischengeschaltet werden, der die Primärwelle ins Schnelle übersetzt. Die Triebverbindung zwischen Primärwelle und Rotor des Retarders wird im allgemeinen ebenfalls auf mechanische Weise hergestellt sein. Auch hierbei kann - zusätzlich oder alternativ zu dem genannten Hochgang - ein weiterer Hochgang vorgesehen werden.

Die Kupplung ist vorzugsweise eine hydrodynamische Kupplung. Das Primärteil ist in diesem Falle ein Pumpenrad, das von der Primärwelle angetrieben wird und seinerseits das Turbinenrad antreibt. Sowohl Retarder, als auch Kupplung werden im allgemeinen wenigstens schaltbar sein, insbesondere regelbar. Gleiches gilt für den Hochgang beziehungsweise für die Hochgänge.

Die Primärwelle kann außer den genannten Teilen - Rotor des Retarders und Primärteil der Kupplung - auch noch das Laufrad einer Pumpe antreiben, die beispielsweise zum Umwälzen eines Arbeitsmediums dient.

Retarder und Kupplung haben normalerweise ein Gehäuse. Die Gehäuseteile dieser beiden Aggregate können konstruktiv miteinander vereinigt sein.

Gegebenenfalls kann ein einziges Gehäuse für diese beiden Teile vorgesehen werden.

Ein weiterer Schritt in Richtung auf die Kompaktheit der Konstruktion besteht darin, den Rotor des Retarders und den Primärteil der Kupplung baulich miteinander zu vereinigen. Dies ist besonders vorteilhaft im Falle der Anwendung einer hydrodynamischen Kupplung. Wie bekannt, weisen der hydrodynamische Retarder als auch die hydrodynamische Kupplung jeweils einen toroidalen Arbeitsraum auf. In einem Axialschnitt gesehen sind dabei die betreffenden Teile der Arbeitsräume "Rücken an Rücken" angeordnet.

Ganz allgemein kann gesagt werden, daß wenigstens zwei der folgenden Bauteile baulich miteinander vereinigt sind: der Rotor des Retarders, der Primärteil der Turbokupplung und das Laufrad einer Pumpe.

Femer können wenigstens zwei der drei Aggregate - Retarder, Kupplung, Pumpe - ein und dasselbe Arbeitsmedium verwenden.

Es ist ferner möglich, zwei Kupplungen vorzusehen, die von unterschiedlicher Bauart sind, beispielsweise eine Turbokupplung und außerdem noch eine Visko-Kupplung oder eine Elektro-Kupplung.

Die gesamte, oben beschriebene Baugruppe - umfassend Primärwelle, Sekundärwelle, Retarder, Kupplung sowie gegebenenfalls Hochgang und Pumpe - wird im allgemeinen zwischen der Frontpartie eines Motors und einem Kühler angeordnet sein. Die erfindungsgemäße Baugruppe ist kompakt im Aufbau, von geringem Gewicht und kostengünstig in der Herstellung.

Es versteht sich, daß der Hochgang auf jegliche Weise realisiert werden kann, beispielsweise durch einen Zahnradsatz, einen Kettenantrieb oder einen Riemenantrieb.

Die Erfindung ist anhand der Zeichnungen näher erläutert. Darin ist im einzelnen folgendes dargestellt:
- Fig. 1-3: zeigen jeweils eine Ausführungsform einer erfindungsgemäßen Baugruppe.
- Fig. 4 u.5: zeigen jeweils ein Steuerschema, das eine erfindungsgemäße Baugruppe enthält.

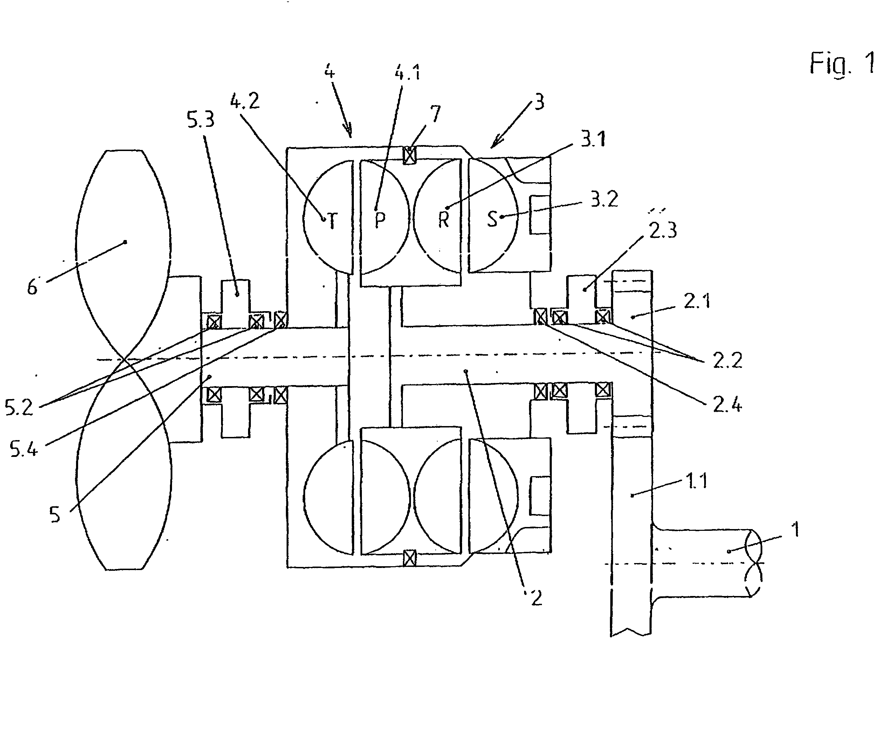

Die in Figur 1 dargestellte erfindungsgemäße Baugruppe enthält die folgenden Bauteile, in Richtung des Kraftflusses vom Motor aus bei normalem Fahrbetrieb gesehen:
Eine Motorantriebswelle 1, eine Primärwelle 2, einen Retarder 3, eine Turbokupplung 4, eine Sekundärwelle 5 sowie das Laufrad 6 eines Lüfters.

In Figur 1 ist zwischen der Motor-Antriebswelle 1 und der Primärwelle 2 ein Hochgang vorgesehen, umfassend zwei Zahnräder 1.1, 2.1. Die Primärwelle ist mittels zweier Lager 2.2 gelagert. Es ist ein Lagergehäuse 2.3 vorgesehen, ferner eine Dichtung 2.4.

Der Retarder umfaßt einen Rotor 3.1 und einen Stator 3.2. Die Turbokupplung umfaßt ein Pumpenrad 4.1 und ein Turbinenrad 4.2. Rotor 3.1 und Pumpenrad 4.1 sind mit der Primärwelle 2 drehfest verbunden. Gleichzeitig bilden sie ein einziges Bauteil. Es ist ferner eine Dichtung 7 vorgesehen, die das genannte einzige Bauteil gegen ein hier nicht näher abgehandeltes Gehäuse abdichtet.

Die Sekundärwelle 5 ist in Lagern 5.2 gelagert. Es ist wiederum ein Lagergehäuse 5.3 vorgesehen, desgleichen eine Dichtung 5.4.

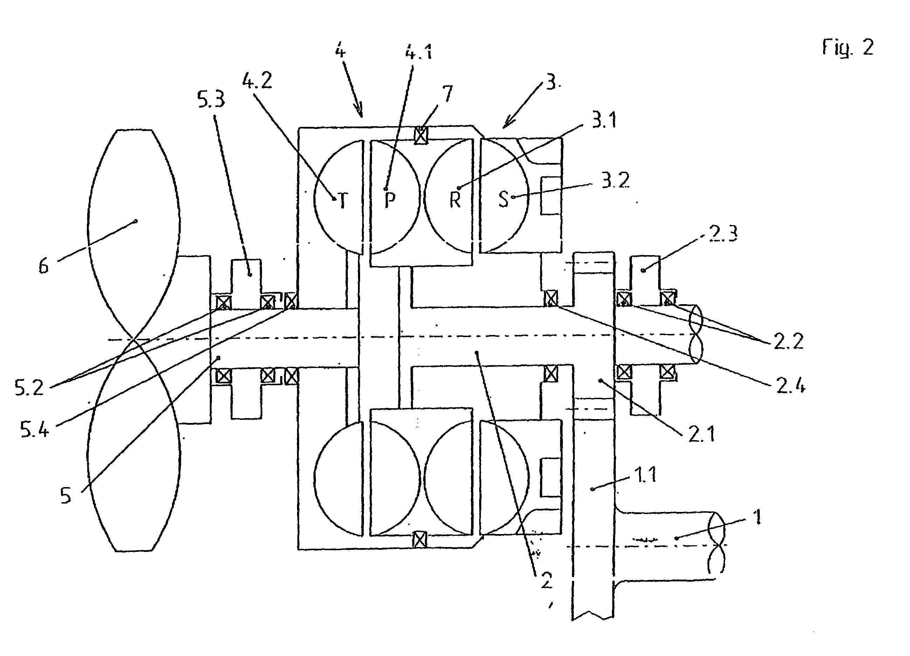

Die Ausführungsform gemäß Figur 2 weist nur relativ geringfügige Unterschiede gegenüber jener von Figur 1 auf. Diese bestehen hauptsächlich in der Anordnung der Lager 2.2 und des Lagergehäuses 2.3. Das Zahnrad 2.1 ist somit links des Lagers 2.2 mit Lagergehäuse 2.3 angeordnet. Dem gemäß sind Rotor 3.1 und Pumpenrad 4.1 "fliegend links" gelagert.

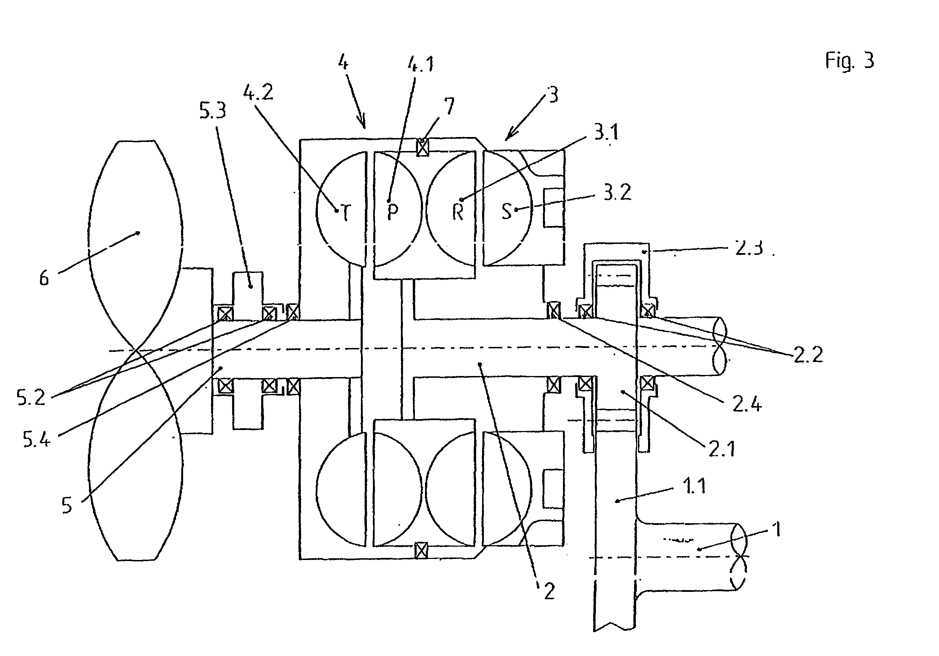

Bei der Ausführungsform gemäß Figur 3 ist wiederum die Lagerung etwas anders. Wie man sieht, befinden sich die beiden Lager 2.2 beidseits des Antriebsritzels 2.1. Das Lagergehäuse 2.3 umgreift das Antriebsritzel 2.1. Auch hier sind Rotor 3.1 und Pumpenrad 4.1 "fliegend links" gelagert.

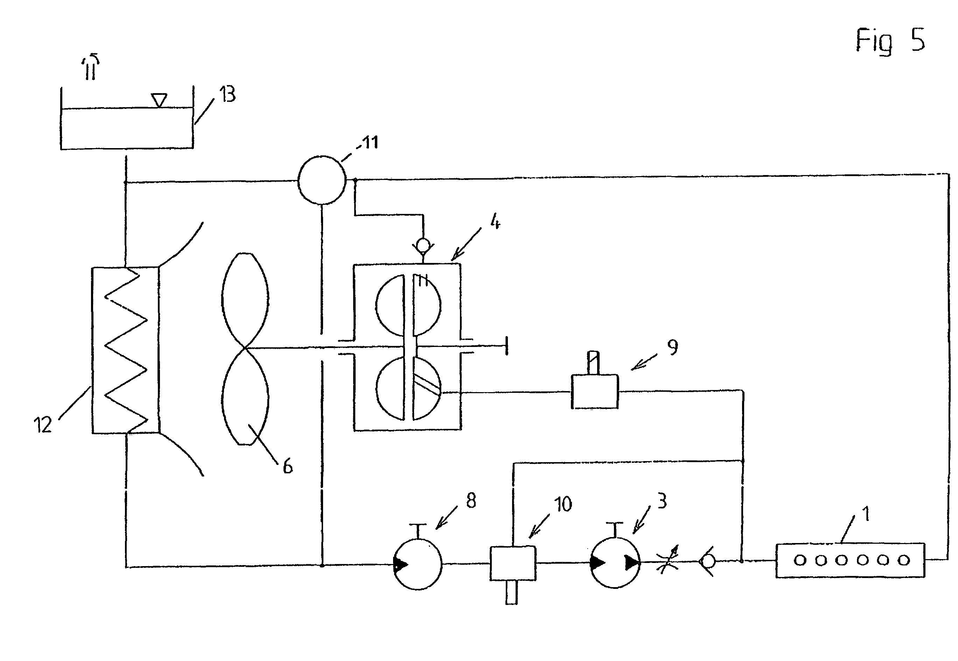

Bei den Steuerschemata gemäß der Figuren 5 und 6 erkennt man einen Motor 1, einen Retarder 3, eine Turbokupplung 4 sowie das Laufrad 6 eines Lüfters. Es sind ferner eine Pumpe 8 vorgesehen, ein Schaltventil 9, ein Umschaltventil 10, einen Thermostaten 11, einen Kühler 12 und einen Ausgleichsbehälter 13.

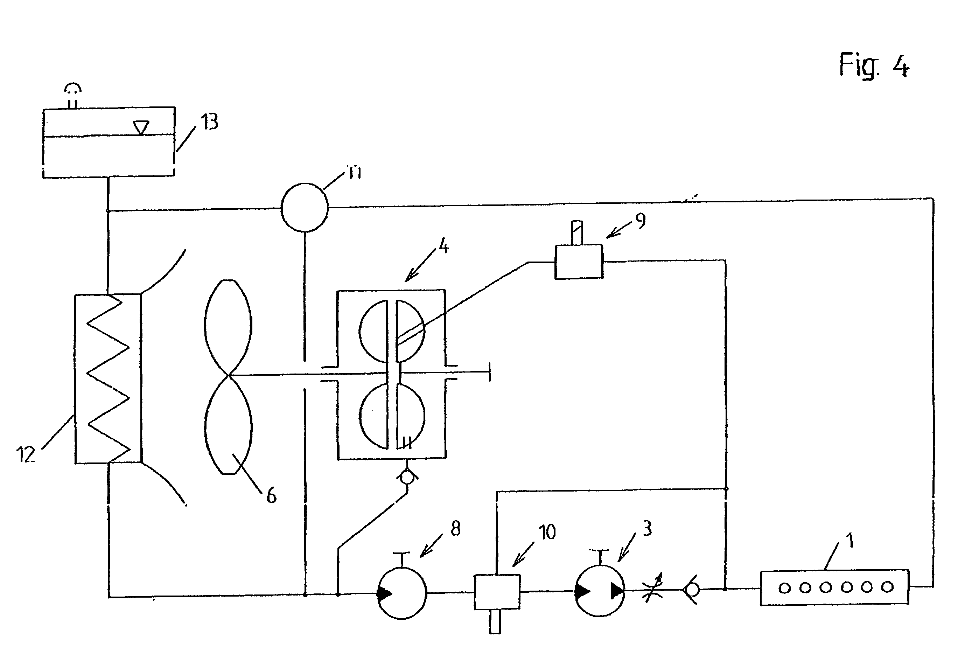

Bei dem Schema gemäß Figur 4 wird das Arbeitsmedium für die Turbokupplung 4 zwischen der Pumpe 8, dem Retarder 3 und dem Motor 1 abgegriffen, somit an einer Stelle relativ hohen Druckes.

Der Rücklauf des Arbeitsmediums von der Turbokupplung 4 wird zwischen Kühler 12 und Pumpe 8 eingeleitet, somit an einer Stelle relativ geringen Druckes.

Bei dem Schema gemäß Figur 5 wird Arbeitsmedium für die Turbokupplung 4 zwischen Pumpe 8, Retarder 3 und Motor 1 abgegriffen.

Der Rücklauf des Arbeitsmediums von der Turbokupplung 4 wird sehr nahe beim Thermostaten 11 in den Kreislauf eingeleitet.

## Patentansprüche

1. Baugruppe für eine Brennkraftmaschine (1)mit einem Hiltsantriebsstrang zum Antreiben eines Hiltsaggregates;
1.1 mit einer Primärwelle (2);
1.2 mit einer Sekundärwelle (5);
1.3 mit einem hydrodynamischen Retarder (3), umfassend einen Rotor (3.1) und einen Stator (3.2); **gekennzeichnet durch** die folgenden Merkmale;
1.4 mit einer Kupplung (4), umfassend ein Primärteil (4.1) und ein Sekundärteil (4.2);
1.5 der Rotor (3.1) des Retarders (3) und das Primärteil (4.1) der Kupplung (4) sind von der Primärwelle (2) angetrieben;
1.6 das Sekundärteil (4.2) der Kupplung (4) und das Laufrad (6) des Hilfsaggregates stehen mit der Sekundärwelle (5) in Triebverbindung.

2. Baugruppe nach Anspruch 1, **dadurch gekennzeichnet, daß** die Kupplung (4) eine Turbokupplung (4) mit einem Primärrad und einem Sekundärrad ist.

3. Baugruppe nach Anspruch 1 oder 2, **dadurch gekennzeichnet, daß** Primärwelle (2) und Sekundärwelle (5) koaxial zueinander angeordnet sind.

4. Baugruppe nach einem der Ansprüche 1 bis 3, **dadurch gekennzeichnet, daß** Gehäuseteile von Retarder (3) und Kupplung (4) baulich miteinander vereinigt sind.

5. Baugruppe nach einem der Ansprüche 1 bis 4, **dadurch gekennzeichnet, daß** das Laufrad einer Pumpe (8) ebenfalls mit der Primärwelle (2) in Triebverbindung steht.

6. Baugruppe nach einem der Ansprüche 1 bis 5, **dadurch gekennzeichnet, daß** zwischen der Primärwelle (2) und dem Rotor (3.1) des Retarders (3) ein Hochgang geschaltet ist.

7. Baugruppe nach einem der Ansprüche 1 bis 6, **dadurch gekennzeichnet, daß** der Rotor (3.1) des Retarders (3) und das Primärteil(4.1) der Kupplung (4) baulich miteinander vereinigt sind.

8. Baugruppe nach einem der Ansprüche 1 bis 7, **dadurch gekennzeichnet, daß** wenigstens zwei der drei Aggregate - Retarder (3), Kupplung (4), Pumpe (8) - ein und dasselbe Arbeitsmedium verwenden.

9. Baugruppe nach einem der Ansprüche 1 bis 8, **dadurch gekennzeichnet, daß** zwischen der Brennkraftmaschine (1) und der Primärwelle (2) ein Hochgang (1.1, 2.1) geschaltet ist.

10. Baugruppe nach Anspruch 9, **dadurch gekennzeichnet, daß** der Hochgang zwischen der Hauptwelle der Brennkraftmaschine (1) und der Primärwelle (2) geschaltet ist.

11. Baugruppe nach einem der Ansprüche 1 bis 10, **dadurch gekennzeichnet, daß** wenigstens eines der folgenden Aggregate-Hochgang, Retarder (3), Kupplung (4) - schaltbar oder regelbar ist.

12. Baugruppe nach einem der Ansprüche 1 bis 11, **dadurch gekennzeichnet, daß** zwei Kupplungen unterschiedlicher Bauarten vorgesehen sind.

13. Baugruppe nach einem der Ansprüche 1 bis 12, **dadurch gekennzeichnet, daß** die Baugruppe zwischen der Frontpartie der Brennkraftmaschine (1) und einem Kühler (12) angeordnet ist.

14. Baugruppe nach einem der Ansprüche 1 bis 13, **dadurch gekennzeichnet, daß** das Hilfsaggregat das Laufrad (6) eines Lüfters ist.

## Claims

1. A module for an internal combustion engine (1) with an auxiliary drive line for driving an auxiliary unit;
1.1 with a primary shaft (2);
1.2 with a secondary shaft (5);
1.3 with a hydrodynamic retarder (3), comprising a rotor (3.1) and stator (3.2); **characterized by** the following features:
1.4 a coupling (4), comprising a primary part (4.1) and a secondary part (4.2);
1.5 the rotor (3.1) of the retarder (3) and the primary part (4.1) of the coupling (4) are driven by the primary shaft (2);
1.6 the secondary part (4.2) of the coupling (4) and the running wheel (6) of the auxiliary unit are in driving connection with the secondary shaft (5).

2. A module as claimed in claim 1, **characterized in that** the coupling (4) is a hydraulic coupling (4) with a primary wheel and a secondary wheel.

3. A module as claimed in claim 1 or 2, **characterized in that** the primary shaft (2) and the secondary shaft (5) are disposed coaxially with respect to each other.

4. A module as claimed in one of the claims 1 to 3, **characterized in that** the housing parts of retarder (3) and coupling (4) are constructionally joined with each other.

5. A module as claimed in one of the claims 1 to 4, **characterized in that** the running wheel of a pump (8) is also in driving connection with the primary shaft (2).

6. A module as claimed in one of the claims 1 to 5, **characterized in that** a high gear is switched between the primary shaft (2) and the rotor (3.1) of the retarder (3).

7. A module as claimed in one of the claims 1 to 6, **characterized in that** the rotor (3.1) of the retarder (3) and the primary part (4.1) of the coupling (4) are constructionally joined with each other.

8. A module as claimed in one of the claims 1 to 7, **characterized in that** at least two of the three units, namely retarder (3), coupling (4), pump (8), use one and the same working medium.

9. A module as claimed in one of the claims 1 to 8, **characterized in that** a high gear (1.1, 2.1) is switched between the internal combustion engine (1) and the primary shaft (2).

10. A module as claimed in claim 9, **characterized in that** the high gear between the main shaft of the internal combustion engine (1) and the primary shaft (2) is switched.

11. A module as claimed in one of the claims 1 to 10, **characterized in that** at least one of the following units, namely high gear, retarder (3), coupling (4), is switchable or controllable.

12. A module as claimed in one of the claims 1 to 11, **characterized in that** two couplings of different construction are provided.

13. A module as claimed in one of the claims 1 to 12, **characterized in that** the module is disposed between the front section of the internal combustion engine (1) and a radiator (12).

14. A module as claimed in one of the claims 1 to 13, **characterized in that** the auxiliary unit is the running wheel (6) of a cooling fan.

## Revendications

1. Ensemble pour un moteur à combustion interne (1) avec une ligne auxiliaire de transmission pour l'entraînement d'un organe auxiliaire ;
1.1 avec un arbre primaire (2) ;
1.2 avec un arbre secondaire (5) ;
1.3 avec un ralentisseur hydrodynamique (3), comportant un rotor (3.1) et un stator (3.2) ;
**caractérisé par** les particularités suivantes :
1.4 avec un accouplement (4) comportant une partie primaire (4.1) et une partie secondaire (4.2) ;
1.5 le rotor (3.1) du ralentisseur (3) et la partie primaire (4.1) de l'accouplement (4) sont entraînés par l'arbre primaire (2) ;
1.6 la partie secondaire (4.2) de l'accouplement (4) et la roue mobile (6) de l'organe auxiliaire sont en liaison d'entraînement avec l'arbre secondaire (5).

2. Ensemble selon la revendication 1, **caractérisé en ce que** l'accouplement (4) est un turbo-accouplement (4) avec une roue primaire et une roue secondaire.

3. Ensemble selon la revendication 1 ou 2, **caractérisé en ce que** l'arbre primaire (2) et l'arbre secondaire (5) sont agencés de manière coaxiale l'un par rapport à l'autre.

4. Ensemble selon l'une des revendications 1 à 3, **caractérisé en ce que** les pièces de carter du ralentisseur (3) et de l'accouplement (4) sont structurellement réunies entre elles.

5. Ensemble selon l'une des revendications 1 à 4, **caractérisé en ce que** la roue mobile d'une pompe (8) se trouve également en liaison d'entraînement avec l'arbre primaire (2).

6. Ensemble selon l'une des revendications 1 à 5, **caractérisé en ce qu'**un multiplicateur de vitesse est monté entre l'arbre primaire (2) et le rotor (3.1) du ralentisseur (3).

7. Ensemble selon l'une des revendications 1 à 6, **caractérisé en ce que** le rotor (3.1) du ralentisseur (3) et la partie primaire (4.1) de l'accouplement (4) sont structurellement réunis entre eux.

8. Ensemble selon l'une des revendications 1 à 7, **caractérisé en ce qu'**au moins deux des trois organes - ralentisseur (3), accouplement (4), pompe (8) - utilisent un seul et même fluide de travail.

9. Ensemble selon l'une des revendications 1 à 8, **caractérisé en ce qu'**un multiplicateur de vitesse (1.1, 2.1) est monté entre le moteur à combustion interne (1) et l'arbre primaire (2).

10. Ensemble selon la revendication 9, **caractérisé en ce que** le multiplicateur de vitesse est monté entre l'arbre principal dù moteur à combustion interne (1) et l'arbre primaire (2).

11. Ensemble selon l'une des revendications 1 à 10, **caractérisé en ce qu'**au moins l'un des organes suivants - multiplicateur de vitesse, ralentisseur (3), accouplement (4) est commutable ou réglable.

12. Ensemble selon l'une des revendications 1 à 11, **caractérisé en ce qu'**il est prévu deux accouplements de catégories différentes.

13. Ensemble selon l'une des revendications 1 à 12, **caractérisé en ce que** l'ensemble est agencé entre la partie frontale du moteur à combustion interne (1) et un refroidisseur (12).

14. Ensemble selon l'une des revendications 1 à 13, **caractérisé en ce que** l'organe auxiliaire est la roue mobile (6) d'un ventilateur.
